**Europäisches Patentamt**

**European Patent Office**

**Office européen des brevets**

(19)

(11) Publication number: **0 233 560**

**A2**

# (12) EUROPEAN PATENT APPLICATION

(21) Application number: **87101667.1**

(22) Date of filing: **06.02.87**

(51) Int. Cl.4: **F24H 7/04 , F24H 9/20**

(30) Priority: **07.02.86 US 827773**

(43) Date of publication of application:
**26.08.87 Bulletin 87/35**

(84) Designated Contracting States:
**AT BE CH DE ES FR GB GR IT LI LU NL SE**

(71) Applicant: **NATIONAL PATENT DENTAL PRODUCTS Inc.**
**9 West 57th Street Rm. 4170**
**New York N.Y. 10019(US)**

(72) Inventor: **Friedman, Aaron**
**45 Stonegate Drive**
**Wetherfield Connecticut 06109(US)**
Inventor: **Minns, Gordon**
**34 South Main Street**
**Suffield Connecticut 06078(US)**

(74) Representative: **Lehn, Werner, Dipl.-Ing. et al**
**Hoffmann, Eitle & Partner Patentanwälte**
**Arabellastrasse 4**
**D-8000 München 81(DE)**

(54) **Heater device.**

(57) An electrically powered, intermittently operated heater device (10) for heating a liquid to a predetermined temperature which comprises:

a) a heat sink (22);

b) an electrical resistance heating element (16) embedded within the heat sink such that when electrical power is delivered to the heating element, heat is transferred therefrom to the heat sink and when the delivery of electrical power to the heating element is temporarily interrupted, residual heat in the heating element is transferred therefrom to the heat sink, the total quantity of heat transferred to the heat sink from the heating element not exceeding the heat capacity of the heat sink so that the temperature of the heat sink remains relatively constant both when electrical power is being delivered to the heating element and when the delivery of electrical power to the heating element is temporarily interrupted; and,

c) a conduit (14) for the flow of a liquid to be heated to a predetermined temperature substantially corresponding to the temperature of the heat sink, the conduit having an inlet (12) for admitting liquid at a temperature below the predetermined temperature and an outlet (13) for discharging liquid at the predetermined temperature, the conduit being embedded within the heat sink such that electrical contact between the heating element and the liquid is prevented and such that heat is transferred from the heat sink to liquid present in the conduit raising the temperature of the liquid from the temperature at the conduit inlet to the predetermined temperature at the conduit outlet and being separated in the heat sink from the heating element by a distance which is sufficient to prevent or minimize the possibility of hot spots developing in the liquid.

FIG. 2

# HEATER DEVICE

## BACKGROUND OF THE INVENTION

This invention relates to an electrically powered, intermittently operated heater device capable of heating a liquid to a predetermined temperature, e.g., a body-treating liquid to about body temperature.

For some types of biomedical apparatus which deliver a liquid for contact with a body or for introduction into a body cavity, it is desirable to provide the liquid heated to approximately the normal temperature of the body prior to application in order to assure minimum discomfort to the patient. For example, in commonly assigned pending U.S. patent application Serial No. 827,793 entitled "Method and Apparatus for Applying a Chemical Solution Useful in the Treatment of Teeth", the temperature of a solution used to soften carious material so that the latter can be removed by abrasion should, at the time of its application to the carious lesion, be desirably maintained within a few degrees of normal body temperature, e.g., from about 90°F to about 105°F, thus affording maximum comfort to the patient.

In a known heater device, liquid to be heated is circulated about, or otherwise brought into direct contact with, an electrically powered insulated heating element with heat being transferred from the heating element to the liquid. The heater device is associated with suitable control means for heating the liquid at or within a few degrees of a predetermined temperature. The device operates well enough when there is a sufficient flow of liquid past the heating element to continuously carry away heat therefrom. However, when the delivery of electrical power to the heating element is purposely interrupted, as when flow of liquid is temporarily discontinued, residual heat from the heating element continues to transfer to the liquid in the vicinity of the heating element causing the liquid to overheat. Overheating can occur to such an extent that the liquid in proximity to the heating element begins to boil. Such a heater device is therefore unacceptable for heating liquids to be contacted with or introduced into, the body. A device of this type poses the additional disadvantage that where a corrosive liquid is to be heated, there is a danger that over a prolonged period the liquid will eventually breach the casing of the heating element, penetrate the insulation and then come into electrical contact with the liquid. The possibility of an accidental electrocution in such circumstances has been a sufficient enough reason to preclude the use of such a heater device in apparatus intended to supply a heated body-treating liquid.

## SUMMARY OF THE INVENTION

In accordance with the invention, an electrically powered, intermittently operated heater device for heating a liquid to a predetermined temperature is provided which comprises:

    a) a heat sink;

    b) an electrical resistance heating element embedded within the heat sink such that when electrical power is delivered to the heating element, heat is transferred therefrom to the heat sink and when the delivery of electrical power to the heating element is temporarily interrupted, residual heat in the heating element is transferred therefrom to the heat sink, the total quantity of heat transferred to the heat sink from the heating element not exceeding the heat capacity of the heat sink so that the temperature of the heat sink remains relatively constant both when electrical power is being delivered to the heating element and when the delivery of electrical power to the heating element is temporarily interrupted; and,

    c) a conduit for the flow of a liquid to be heated to a predetermined temperature substantially corresponding to the temperature of the heat sink, the conduit having an inlet for admitting liquid at a temperature below the predetermined temperature and an outlet for discharging liquid at the predetermined temperature, the conduit being embedded within the heat sink such that electrical contact between the heating element and the liquid is prevented and such that heat is transferred from the heat sink to liquid present in the conduit raising the temperature of the liquid from the temperature at the conduit inlet to the predetermined temperature at the conduit outlet and being separated in the heat sink from the heating element by a distance which is sufficient to prevent or minimize the possibility of hot spots developing in the liquid.

The heater device of the present invention is especially advantageous for heating a body-treating liquid at or within a few degrees, e.g., to within 5°F or so, of the temperature of a body with which the liquid will be contacted.

The heater device of this invention completely overcomes the disadvantages associated with the known types of heater devices. The ability of the heat sink component of the heater device to continue to absorb residual heat from the heating element when power thereto has been interrupted prevents the temperature of the heat sink from exceeding the range of temperature to which it is desired to heat the liquid present in the conduit by any significant extent. In addition, since there is no direct contact of the heating element with the conduit there is little, if any, opportunity for the liquid present in the conduit to ever come into electrical contact with the heating element.

BRIEF DESCRIPTION OF THE DRAWINGS

Further objects and advantages of the invention will become apparent from the following description and accompanying drawings, wherein:

Figure 1 is a front view in elevation of one embodiment of a heater device in accordance with the present invention;

Figure 2 is a top plan view of the heater device of Figure 1;

Figure 3 is a side view in elevation of the heater device of Figure 2 as seen from the right hand side of Figure 2;

Figure 4 is a graph showing the heating characteristics of the heater device of the present invention after initiating a flow of liquid at ambient temperature; and,

Figure 5 is a graph showing the heating characteristics of the heater device of the present invention after flow of liquid has been interrupted.

DESCRIPTION OF THE PREFERRED EMBODIMENTS

In one embodiment of the heater device, a conduit comprising a coiled tube, e.g., of stainless steel, is provided surrounding a conventional U-shaped insulated electrical resistance heating element embedded in a heatsink, e.g., a mass of metal having a high heat capacity. Materials useful for fabricating the heat sink include metals and metal alloys such as aluminum, copper, brass, iron, steel, etc., and non-metals, e.g., various eutectic salt mixtures known in the art. Aluminum serves well as a heat sink since its high heat capacity endows it with the ability to maintain a relatively constant temperature, e.g., within 5-10°F of a predetermined level, depending, of course, on the mass of the metal and the power (thermal) output of the heating element. Aluminum is fairly low in cost and can be readily cast into just about any desired configuration with the heating element and conduit embedded therein.

The liquid to be heated is pumped through the conduit and electrical power is applied to the heating element which transfers its heat to the heat sink. Heat is then transferred from the heat sink to the liquid raising its temperature to a predetermined extent. Such design and operational factors as the heat capacity and mass of the heat sink, the residence time of liquid in the conduit (itself influenced by such factors as fluid pressure and conduit length and diameter), the configuration of the heating element and the power level at which the heating element is operated will determine the temperature to which the liquid is heated. Those skilled in the art can readily establish suitable design parameters for a given service requirement.

A temperature sensor means, e.g., a thermistor, associated with means for controlling the intermittent delivery and interruption of electrical power to the heating element can be secured to the heat sink, preferably near the conduit outlet. The temperature sensor continuously monitors the temperature of the heat sink and, in cooperation with the power delivery control means, prevents the temperature of the heat sink from exceeding a predetermined level. This arrangement has several advantages. During steady state operation, i.e., when liquid is flowing through the conduit, the temperature of the liquid at the conduit outlet tends to track the temperature of the heat sink in the vicinity thereof. The temperature sensor emits a control signal which is fed into, and processed by, an electronic circuit of known or conventional design which regulates the delivery of power to the heating element. While liquid is flowing, the temperature sensor primarily detects the temperature of the liquid at the outlet. If the liquid flow within the conduit is interrupted, the temperature of the heat sink in the vicinity of the temperature sensor will start to rise because heat is no longer being removed from the heat sink by liquid flowing therethrough. The electronic power control circuit will respond to this increase in temperature by interrupting delivery of power to the heating element if the temperature reaches a predetermined maximum level, e.g., on the order of 105°F where the liquid being heated is to come into contact with a body. However, the temperature of the stagnant liquid within the conduit will rise by only a modest extent, e.g., approximately 3-5°F above the preferred temperature range of about 90-105°F. Eventually, the temperature of the heat sink, and with it the temperature of the liquid, will begin to drop because of thermal losses. When this occurs, the temperature sensor will signal the power control circuit to resume delivery of electrical power to the heating element. In operation, the ability of the heat sink to withstand large fluctuations in temperature permits maintenance of a predetermined temperature level within relatively constant limits, e.g., within 5-10°F as may be desired.

When the heater device has not been in operation for a relatively long period of time, the heat sink and any liquid present in the conduit will eventually attain ambient temperature. When the main power switch of the unit is turned on, full heating power is delivered to the heating element to elevate the temperature of the liquid. Placement of the temperature sensor at the outer periphery of the heat sink permits the temperature of the heat sink to rise, e.g., to approximately 105°F, before the power is interrupted by the electronic power controller in response to a signal from the temperature sensor. This elevated temperature persists for a short period, e.g., for approximately five minutes, until thermal losses begin to lower the temperature back to the predetermined level of, say, 98°F.

Referring to Figs. I-3, heat sink 22 of heater device I0 is provided as a casting of aluminum metal. Cast block 22 is provided with support legs 26 and 28 for supporting the block on a planar surface. A generally U-shaped electrical resistance heating element I6, e.g., of nichrome wire, and of suitable power rating, e.g., from about 30 to about I20 watts and preferably from about 40 to about I00 watts, surrounded by ceramic electrical insulation I7 and encased in a protective sheath I9, e.g., of stainless steel, is embedded in the aluminum casting and is provided with external leads I8 and 20 for connecting the heating element to an electrical current source. Heating element I6 can be operated at a constant or varying power level. In the case of the latter, the heating element can be operated for a brief period at the upper end of its rated power range when the unit is first turned on in order to accelerate the heating of cast block 22 and thereafter the power can be reduced to a lower level. A flow of liquid to be heated (Solution S) is introduced into helical, or coiled, conduit I4 at inlet I2 and, heated to the predetermined temperature, is discharged from the conduit at outlet I3. Any suitable means, e.g., a pump, can be used to supply a flow of liquid through conduit I4. Like heating element I6, conduit I4 is embedded in the aluminum casting and is advantageously separated from the heating element by a distance which is sufficient to prevent or minimize the possibility of hot spots developing in Solution S. In operation, heating element I6 will transfer heat to aluminum block 22 which in turn will transfer heat to Solution S present in conduit I4. The temperature of the aluminum block governs the temperature of Solution S, the two being approximately the same.

A temperature sensor 23, e.g., a thermistor, can be mounted on the surface of block 22 near conduit outlet I3 as part of an arrangement for controlling the intermittent delivery and interruption of electrical power to the heating element whereby the desired predetermined level of temperature is substantially maintained.

Solution S is a caries removal solution which is intended to be delivered to the oral cavity of a patient as a fine pulsing stream heated to about the patient's normal body temperature,i.e., about 98.6°F, and maintained within this temperature within a few degrees, say about ± 5°F. Suitable solutions can be prepared by forming an admixture containing (a) at least one aminoalkanoic acid containing from I to about I8 carbon atoms, e.g., DL-2-aminobutyric acid, glycine, etc., (b) an alkali metal hydroxide, e.g., sodium hydroxide, (c) an alkali metal halide, e.g., sodium chloride, and (d) an alkali metal hypochlorite, e.g., sodium hypochlorite, in deionized water and preferably maintained at a pH of from about 9 to about I2. The active ingredient is believed to be N-chlorinated aminoalkanoic acid(s) and/or the alkali metal salt(s) thereof.

The active ingredient presumably reacts with the decalcified, partially degraded collagen of the carious lesion resulting in a softening of the carious material. One suitable solution can be formulated as follows:

DL-2-aminobutyric acid and/or Glycine  0.04-0.06 Mol
Sodium Hydroxide  0.04-0.06 Mol
Sodium Chloride  0.04-0.06 Mol
Sodium Hypochlorite  0.005-0.0I Mol
Deionized Water  An amount sufficient to make one liter of solution
pH of solution  approx. I0-I2 at 20°C.

The foregoing solution is chemically reactive and therefore conduit I4 is preferably fabricated from a corrosion-resistant material, e.g., stainless steel.

In order to maintain Solution S at an optimum temperature, e.g., on the order of about 90°F to about I05°F, the exterior dimensions of block 22 and the length and diameter of coiled conduit I4 for a given flow rate of Solution S should be suitably selected. If block 22 is too small, it will not possess a sufficient reserve of heat storage capacity to be useful. The maximum amount of heat stored in the block should not exceed its heat capacity for otherwise it will increase in temperature beyond the optimum level desired. If block 22 is too large, it will take too long to heat up to the desired temperature level to be practical. In a preferred embodiment, it has been determined that stainless steel tubing having a minimum length of approximately 48 inches, a minimum internal diameter of about 0.I25 inches and wall thickness of approximately 0.02 inches, embedded in an aluminum block whose approximate dimensions are 5 inches × 2 inches × 2 inches, is sufficient in order to obtain and consistently maintain a predetermined temperature of about 90°F to about 105°F in Solution S at a flow rate of 35 ± 5 ml/min. An optimum relationship has been found to exist between the volume of the block/volume of Solution S at a flow rate of 35 ± 5 ml/min once the block has been heated to body temperature in order to attain and maintain proper heating of the solution as it passes through heater device 10. Practical considerations involving economics, time delays in heating and reheating the liquid during intermittent operations, size of the heater, the electrical power input, construction materials of choice, the predetermined temperatures of choice, and the like, will place realistic limits on the dimensions of the components comprising the heater device. Optimization is readily achieved by those skilled in the art.

The flow of Solution S may be interrupted from time to time. However, in certain applications, e.g., in the treatment of teeth with Solution S, since teeth are extremely sensitive to variations in temperature, the solution should still be delivered at a relatively constant temperature regardless of the frequency and duration with which the dentist interrupts the flow of the solution. In the steady state, a continuous input power of approximately 40 watts is usually required to heat Solution S from ambient temperature to a body temperature of approximately 98.6°F. A significant temperature gradient must exist between heating element 16 itself and Solution S passing through heater device 10 in order for sufficient heat energy to be transferred to the solution. At steady state operation, when the solution is being continuously passed through the heater device, electronic controls can regulate the power to the heating element as previously described so that the solution will be discharged at the required temperature. When the dentist releases a switch, e.g., a foot pedal or other suitable mechanism, Solution S ceases to flow through the heater. Residual heat energy stored in heating element 16 continues to transfer to casting 22 causing the temperature of the casting, and therefore the solution, to rise only a few degrees above the predetermined temperature of 90-105°F.

The relationship between the heat capacity of heating element 16 and the heat capacity of casting 22 which thermally couples conduit 14 containing Solution S to heating element 16, and the heat capacity of Solution S contained in heater device 10 at any given time can be empirically determined. The heater design exploits this relationship to limit the temperature rise during intermittent flow patterns. This ensures both the safety and comfort of the patient. The heat capacity of heating element 16 is limited to a small fraction of the heat capacity of the combined aluminum block 22 and liquid-containing stainless steel conduit 14. This limits the amount of residual heat energy which can transfer to the casting by the heating element after delivery of electrical power to the latter is interrupted. In a preferred embodiment, the heat capacity of heating element 16 is from about 2 to about 10% of the heat capacity of the remainder of the heater; about 3 to about 5% is highly preferred.

A second temperature sensor 24 is provided as a safety device to prevent the temperature of the casting from exceeding a predetermined limit should temperature sensor 23 and/or its associated power control circuitry fail to operate properly.

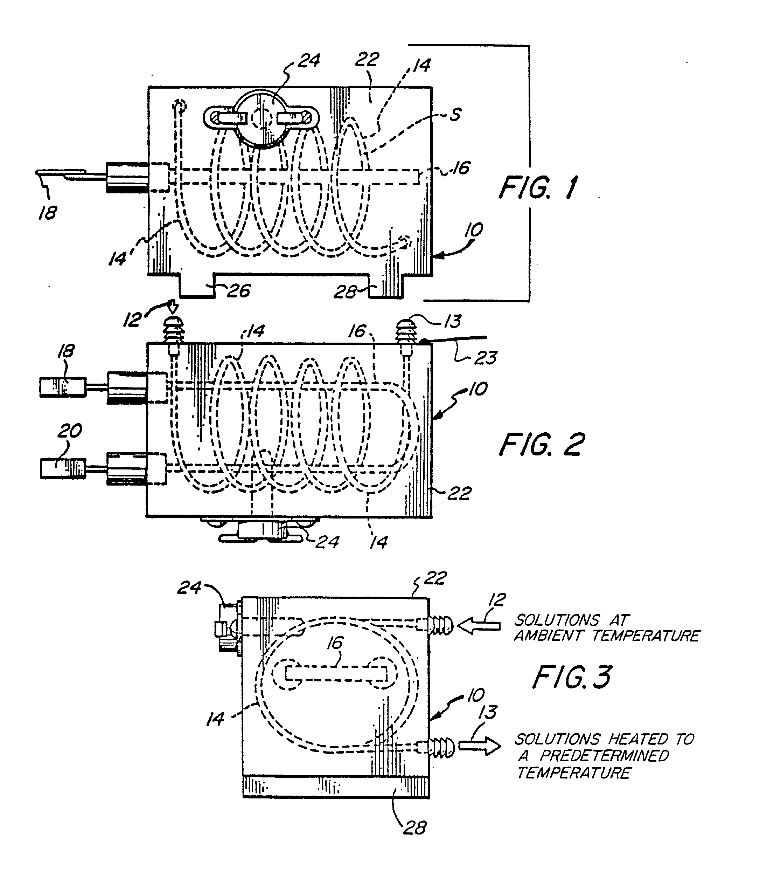

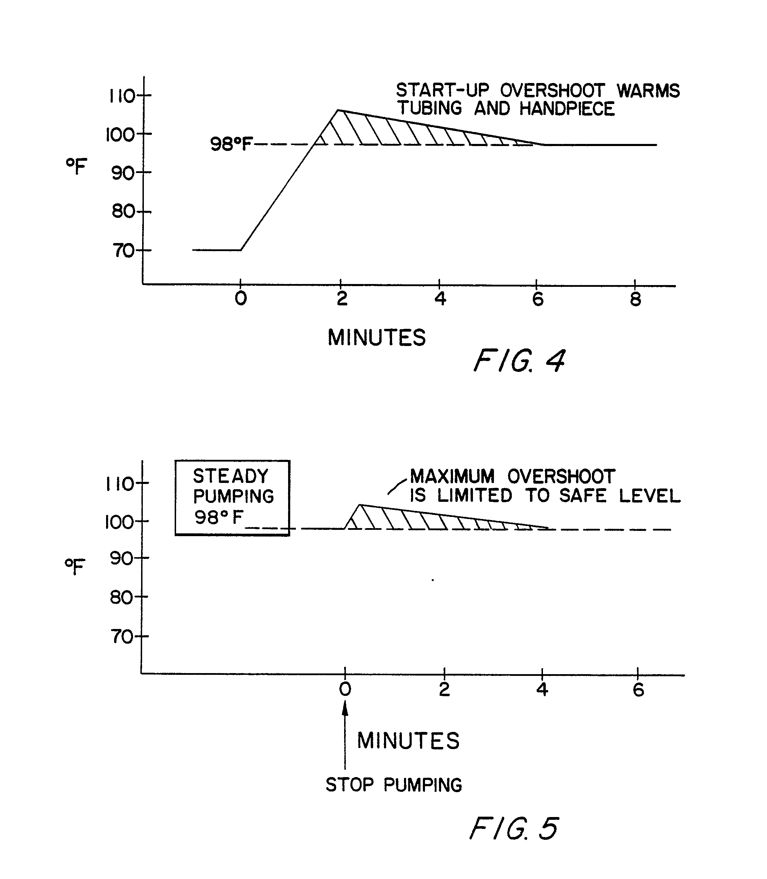

As shown in Fig. 4, a typical time/temperature response curve is given for the heater device of Figs. 1 to 3 where the temperature of Solution S introduced at the conduit inlet is about 70°F. Within about two minutes of start-up employing a heating element output of about 40 watts, there is a brief temperature overshoot which is advantageous in warming the tubing and handpiece of a complete liquid delivery unit used in the treatment of caries as previously explained. Within six minutes or so of start-up, the temperature falls back to the predetermined level of 98°F As shown in Fig. 5, during steady pumping of Solution S, the temperature of the device is uniformly maintained at about 98°F. When the delivery of power to the heating element is temporarily interrupted, there is a modest increase in the temperature of stagnant Solution S present in the conduit (due to the residual heat in the heating element transferring to the aluminum block) which, however, is within an entirely safe level.

## Claims

1. An electrically powered, intermittently operated heater device for heating a liquid to a predetermined temperature which comprises:

a) a heat sink;

b) an electrical resistance heating element embedded within the heat sink such that when electrical power is delivered to the heating element, heat is transferred therefrom to the heat sink and when the delivery of electrical power to the heating element is temporarily interrupted, residual heat in the heating element is transferred therefrom to the heat sink, the total quantity of heat transferred to the heat sink from the heating element not exceeding the heat capacity of the heat sink so that the temperature of the heat sink remains relatively constant both when electrical power is being delivered to the heating element and when the delivery of electrical power to the heating element is temporarily interrupted; and,

c) a conduit for the flow of a liquid to be heated to a predetermined temperature substantially corresponding to the temperature of the heat sink, the conduit having an inlet for admitting liquid at a temperature below the predetermined temperature and an outlet for discharging liquid at the predetermined temperature, the conduit being embedded within the heat sink such that electrical contact between the heating element and the liquid is prevented and such that heat is transferred from the heat sink to liquid present in the conduit raising the temperature of the liquid from the temperature at the conduit inlet to the predetermined temperature at the conduit outlet and being separated in the heat sink from the heating element by a distance which is sufficient to prevent or minimize the possiblity of hot spots developing in the liquid.

2. The heater device of Claim I wherein the heat sink comprises a mass of metal.

3. The heater device of Claim I wherein the heat sink comprises a mass of eutectic salts.

4. The heater device of Claim I wherein the conduit is coiled about the heating element.

5. The heater device of Claim I further comprising control means for regulating the intermittent delivery and interruption of electrical power to the heating element in response to the temperature of the heat sink, said control means including temperature sensing means for sensing the temperature of the heat sink.

6. The heater device of Claim 5 wherein the temperature sensing menas is a thermistor positioned proximate to the conduit outlet.

7. The heater device of Claim I further comprising means for discontinuing the delivery of electrical power to the heating element to prevent the temperature of the heat sink from exceeding a predetermined level.

8. The heater device of Claim 6 wherein the control means is operated to heat the liquid to a conduit outlet temperature range of from about 90°F to about 105°F.

9. The heater device of Claim 8 wherein the control means is operable to maintain the liquid at a conduit outlet temperature within about 5°F of a predetermined value within said range.

10. The heater device of Claim I wherein the heat sink is a block of aluminum 3 inches long, two inches high and 2 inches wide, the conduit is 48 inches long and 0.125 inches in internal diameter with the liquid flow rate through the conduit being about 30 to about 40 ml/min., the heat capacity of the heating element being from 2 to 10 percent of the combined heat capacity of the aluminum block and liquid present in the conduit and the power rating of the heating-element being 30 watts to 120 watts.

*FIG. 1*

*FIG. 2*

*FIG. 3*

SOLUTIONS AT
AMBIENT TEMPERATURE

SOLUTIONS HEATED TO
A PREDETERMINED
TEMPERATURE

START-UP OVERSHOOT WARMS
TUBING AND HANDPIECE

98°F

°F

110
100
90
80
70

0   2   4   6   8

MINUTES

*FIG. 4*

STEADY
PUMPING
98°F

MAXIMUM OVERSHOOT
IS LIMITED TO SAFE LEVEL

°F

110
100
90
80
70

0   2   4   6

MINUTES

STOP PUMPING

*FIG. 5*